**Europäisches Patentamt**

**European Patent Office**

**Office européen des brevets**

(19)

(11) Veröffentlichungsnummer : **0 023 290**
**B1**

(12)

# EUROPÄISCHE PATENTSCHRIFT

(45) Veröffentlichungstag der Patentschrift :
22.06.83

(21) Anmeldenummer : 80103863.9

(22) Anmeldetag : 07.07.80

(51) Int. Cl.³ : **H 02 H 7/16**

(54) **Überwachungseinrichtung für die Spannungsbelastung eines elektrischen Gerätes.**

(30) Priorität : 19.07.79 DE 2929272

(43) Veröffentlichungstag der Anmeldung :
04.02.81 Patentblatt 81/05

(45) Bekanntmachung des Hinweises auf die Patenterteilung : 22.06.83 Patentblatt 83/25

(84) Benannte Vertragsstaaten :
DE GB SE

(56) Entgegenhaltungen :
DE A 1 813 715
DE A 2 140 290
DE A 2 211 827
US A 3 944 890
US A 4 115 829

(73) Patentinhaber : **SIEMENS AKTIENGESELLSCHAFT**
**Berlin und München Wittelsbacherplatz 2**
**D-8000 München 2 (DE)**

(72) Erfinder : **Becker, Michael, Dipl.-Ing.**
**Ringstrasse 50**
**D-8521 Uttenreuth (DE)**
Erfinder : **Weibelzahl, Manfred, Dipl.-Ing.**
**Eichenweg 10**
**D-8521 Weiher (DE)**
Erfinder : **Povh, Dusan, Dr. Dipl.-Ing.**
**Waltherstrasse 3**
**D-8500 Nürnberg (DE)**
Erfinder : **Waldmann, Hermann, Dr.**
**Wiesenstrasse 14**
**D-8521 Weiher (DE)**
Erfinder : **Renz, Klaus, Dipl.-Ing.**
**Heinrich-Heine-Strasse 15**
**D-8510 Fürth (DE)**
Erfinder : **Fendt, Alfons, Dipl.-Ing.**
**Gleiwitzer Strasse 64**
**D-8520 Erlangen (DE)**
Erfinder : **Schuch, Gerhard**
**Heuweg 8**
**D-8520 Erlangen (DE)**

## Überwachungseinrichtung für die Spannungsbelastung eines elektrischen Gerätes

Die vorliegende Erfindung betrifft eine Überwachungsanordnung für die Spannungsbelastung eines elektrischen Gerätes, insbesondere eines Kondensators mit einer Langzeitüberwachung der Gerätespannung, bestehend aus einem Vergleicher zur Erfassung der Differenz zwischen einem vorgebbaren Überspannungswert und der Gerätespannung, einem mit dem Ausgangssignal des Vergleichers gespeisten Kennliniengeber, dessen Ausganssignal einem das Überlastungssignal bildenden, aufwärtsintegrierenden Integrator zugeführt ist und einem von der Differenz zwischen der Gerätespannung und einer einer zulässigen Dauerbelastung entsprechenden Wert beaufschlagten Komparator.

Eine derartige Überwachungsanordnung ist gemäß US-A-39 44 890 bekannt. Mit einer derartigen Überwachungseinrichtung ist es zwar möglich, die Abschaltung des Gerätes nach dem Auftreten einer Geräteüberspannung abhängig zu machen vom Zeitintegral derselben, d. h. bei größeren auftretenden Überspannungen früher abzuschalten als bei kleineren. Es gibt nun eine ganze Reihe von Geräten, wie z. B. Kondensatoren, welche eine länger andauernde Überlastung vertragen, wenn sie eine längere Zeit vor dem Auftreten dieser Überlastung in einem Bereich betrieben wurden, welcher unter dem für eine Dauerbelastung zulässigen Wert liegt und sie sich sozusagen erholt haben. Mit der vorliegenden Erfindung soll daher die Aufgabe gelöst werden, eine Überwachungsanordnung der eingangs genannten Art so zu ertüchtigen, daß sie die Vorbelastung aus vorangegangenen Überlastungen berücksichtigt und daher nur bei einer echten Gefährdung des Gerätes anspricht.

Gelöst wird diese Aufgabe erfindungsgemäß dadurch, daß der Komparator eine konstante, zur Abwärtsintegration des Integrators verwendete Spannung erzeugt, wenn die Gerätespannung kleiner als der der zulässigen Dauerbelastung entsprechende Wert ist. Da mit der Rückintegrationsspannung die Erholung des Gerätes nach einer Überlastung berücksichtigt werden kann, stellt die Ausgangsspannung des Integrators stets ein Maß für den momentanen Belastungszustand des Gerätes dar. Erfolgen mehrere Überlastungen hintereinander, so wird jeweils die Vorbelastung des Gerätes durch die vorhergehenden Überlastungen berücksichtigt. Zum sehr schnellen Erfassen besonders großer Überspannungen kann in weiterer Ausgestaltung der Erfindung parallel zur Langzeitüberwachung eine Kurzzeitüberwachungsstufe vorgesehen werden, welche aus einem von der Gerätespannung beaufschlagten Grenzwertmelder besteht, welchem ein Zeitglied mit Ansprechverzögerung nachgeschaltet ist.

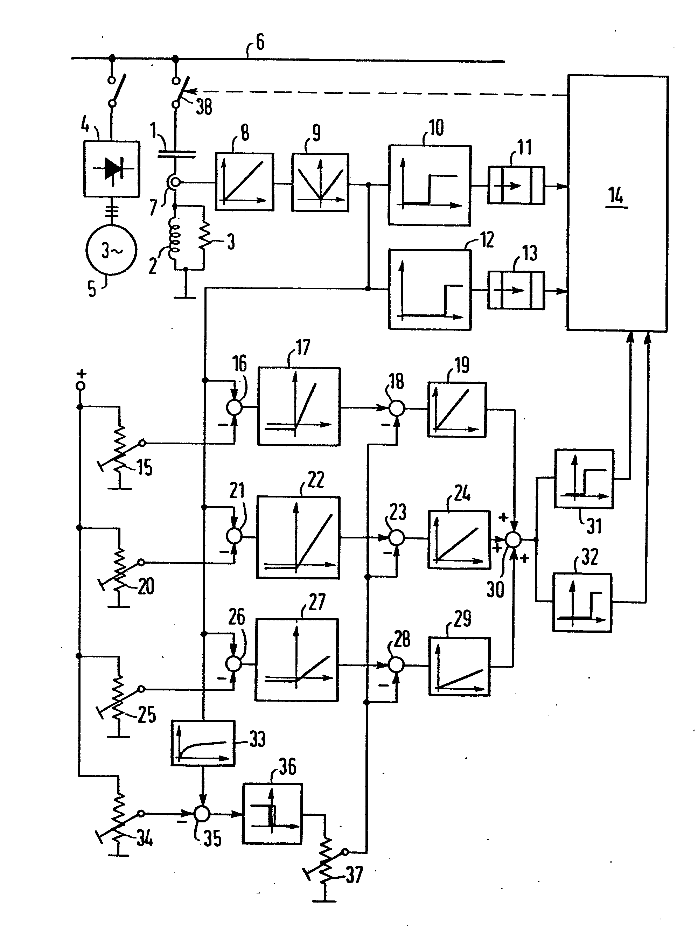

Ein Ausführungsbeispiel der Erfindung wird anhand der Zeichnung näher erläutert:

Dargestellt ist eine erfindungsgemäße Überwachungseinrichtung für den Kondensator 1 eines Saugkreises, der aus der Reihenschaltung des Kondensators 1 und einer Drosselspule 2 besteht. Der Drosselspule 2 ist ein Widerstand 3 parallelgeschaltet. Der Saugkreis ist über eine Schalteinrichtung 38 an eine Gleichstromleitung 6 angeschlossen, insbesondere an eine Hochspannungs-Gleichstrom-Übertragungsleitung. Der Saugkreis dient zur Siebung der Oberwellen in der Gleichspannung, die durch einen gesteuerten Gleichrichter 4 verursacht werden, der an einen Dreiphasengenerator 5 angeschlossen ist. Als Kondensator 1 ist für einen derartigen Anwendungsfall in der Regel eine Kondensatorbatterie mit mehreren parallelgeschalteten Strängen vorgesehen, in denen jeweils eine große Anzahl von Kondensatoren in Reihe geschaltet sind. Die Spannungsbelastung des Kondensators 1 besteht in der Gleichspannung auf der Leitung 6, die praktisch konstant sein wird, beispielsweise 500 kV, und der überlagerten Oberwellenspannung, die sich in Abhängigkeit vom Steuerwinkel des gesteuerten Gleichrichters 4 in einem sehr großen Bereich ändern kann. Wegen der konstanten Gleichspannungsbelastung wird im dargestellten Ausführungsbeispiel nur die Wechselspannungsbelastung durch die Oberschwingungen überwacht.

Zur Erfassung der Wechselspannungsbelastung des Kondensators 1 ist ein induktiver Stromwandler 7 vorgesehen, dessen Ausgangsspannung den Oberwellenstrom durch den Kondensator abbildet. Die Ausgangsspannung des Stromwandlers 7 wird im Integrator 8 zur Nachbildung der Kondensatorspannung integriert und in einer nachgeschalteten Vollweg-Gleichrichterschaltung 9 gleichgerichtet. Aus Sicherheitsgründen werden somit die positiven und negativen Halbwellen der Oberschwingungen gleich bewertet. Die Ausgangsspannung der Vollweg-Gleichrichterschaltung 9 wird Kurzzeit-Überwachungsstufen und Langzeit-Überwachungsstufen zugeführt. Es ist auch möglich, die Oberwellen-Spannung am Kondensator 1 direkt zu messen und gleichzurichten.

Die Kurzzeitüberwachung erfolgt mit zwei Überwachungsstufen. Die erste Überwachungsstufe enthält einen Grenzwertmelder 10 und ein nachgeschaltetes Zeitglied 11 mit Ansprechverzögerung. Die zweite Überwachungsstufe enthält einen Grenzwertmelder 12 und ein Zeitglied 13 mit Ansprechverzögerung. Die Ansprechschwellenwerte der Grenzwertmelder 10 und 12, sowie die Ansprechverzögerungen der nachgeschalteten Zeitglieder 11 und 13 sind unterschiedlich eingestellt.

Zur Erläuterung der Funktionsweise wird ein Zahlenbeispiel gegeben, ohne daß damit jedoch die Erfindung auf eine derartige Ausführung eingeschränkt wird.

Der Ansprechschwellenwert des Grenzwertmelders 10 ist beispielsweise auf einen Wert eingestellt, der 500 kV Überspannung entspricht.

Übersteigt die Wechselspannungsbelastung des Kondensators diesen Wert, so gibt der Grenzwertmelder 10 ein normiertes Ausgangssignal an das Zeitglied 11. Verschwindet die Überspannung am Kondensator wieder, bevor die Ansprechverzögerung des nachgeschalteten Zeitgliedes 11 abgelaufen ist, fällt die Ausgangsspannung des Grenzwertmelders 10 wieder zurück. Das Zeitglied 11 spricht nicht an. Steht dagegen die Überspannung über 500 kV am Kondensator solange an, bis die Ansprechverzögerung des Zeitgliedes 11 abgelaufen ist, so spricht dieses an und gibt ein entsprechendes Signal an die Auswerteeinheit 14. Der Auswerteeinheit 14 wird dieses Signal angezeigt und die Trennung des Siebkreises von der Leitung 6 veranlaßt.

Der Ansprechschwellenwert des Grenzwertmelders 12 ist auf einen Wert eingestellt, der beispielsweise einer Wechselspannungsbelastung des Kondensators 1 von 650 kV entspricht. Da der Kondensator 1 eine derartige höhere Überspannung nur für eine kürzere Zeit aushält, ohne Schaden zu nehmen, ist die Ansprechverzögerung des nachgeschalteten Zeitgliedes 13 auf einen entsprechend kürzeren Wert eingestellt.

Zur Langzeitüberwachung sind drei gleichartig aufgebaute Überwachungsstufen vorgesehen, von denen die erste Überwachungsstufe ein Potentiometer 15, ein Vergleichsglied 16, einen Kennliniengeber 17, ein weiteres Vergleichsglied 18 und einen Integrator 19 aufweist. Die Elemente der zweiten Überwachungsstufe sind mit 20 bis 24 und die Elemente der dritten Überwachungsstufe mit 25 bis 29 bezeichnet. In den Vergleichsgliedern 16, 21, 26 wird die Ausgangsspannung der Vollweg-Gleichrichterschaltung 9, die der Wechselspannungsbelastung entspricht, mit vorgegebenen Spannungswerten verglichen, die an den Potentiometern 15, 20, 25 eingestellt sind. Im gewählten Zahlenbeispiel kann die am Potentiometer 15 eingestellte Spannung auf einen Wert eingestellt sein, der 350 kV entspricht. Die Spannung am Potentiometer 20 kann auf einen Wert eingestellt sein, der 150 kV entspricht und die Spannung am Potentiometer 25 kann auf einen Wert eingestellt sein, der 16 kV entspricht. Die Kennliniengeber 17, 22, 27 haben geknickte Kennlinien mit unterschiedlichen Steigungen.

Übersteigt beispielsweise die Wechselspannungsbelastung des Kondensators den am Potentiometer 25 eingestellten Wert von 16 kV, so gibt der Kennliniengeber 27 ein Ausgangssignal ab, das dem Integrator 29 zugeführt wird. Die Integrationszeitkonstante des Integrators 29 ist auf einen sehr großen Wert eingestellt.

Übersteigt dagegen die Kondensatorüberlastung auch den am Potentiometer 20 eingestellten Wert von 150 kV, so spricht auch der Kennliniengeber 22 an, dessen Ausgangsspannung vom Integrator 24 integriert wird. Die Integrationszeitkonstante des Integrators 24 ist kleiner als die des Integrators 27.

Übersteigt die Kondensatorüberlastung schließlich auch den am Potentiometer 20 eingestellten Wert von 350 kV, so spricht zusätzlich auch der Kennliniengeber 17 an, dessen Ausgangsspannung vom Integrator 19 integriert wird. Die Zeitkonstante des Integrators 19 ist kleiner als die des Integrators 24. Übersteigt die Oberwellen-Spannung am Kondensator 1 einen der Ansprechschwellenwerte der Grenzwertmelder 17, 22, 27 und fällt die Spannung am Kondensator anschließend innerhalb der jeweils zulässigen Überlastungsdauer wieder auf die zulässige Dauerbelastung, so laufen die Integratoren 19, 24, 29 wieder auf ihre untere Begrenzung zurück. Als Rückintegrationsspannung wird die von der Vollweg-Gleichrichterschaltung 9 gleichgerichtete Meßspannung verwendet, die über ein Tiefpaßfilter 33 erster Ordnung geführt und damit in eine amplitudenproportionale Gleichspannung umgeformt wird. Die Ausgangsspannung des Tiefpaßfilters 33 wird in einem Vergleichsglied 35 mit einer am Potentiometer 34 eingestellten Spannung verglichen, die der zulässigen Dauerüberlastung des Kondensators entspricht, beispielsweise 16 kV. Die Ausgangsspannung des Vergleichsgliedes 35 wird auf einen Komperator 36 gegeben, dessen Ansprechschwellenwert auf 0 V eingestellt ist. Überschreitet die Wechselspannungsbelastung des Kondensators den dauernd zulässigen Wert, so gibt der Komperator 36 kein Ausgangssignal ab. Unterschreitet dagegen die Überspannung den dauernd zulässigen Wert, so gibt der Komperator 36 ein Ausgangssignal ab, das über ein Potentiometer 37 den Vergleichsgliedern 18, 23, 28 zugeführt wird. Die Einstellung des Potentiometers 37 bestimmt die Zeitkonstante der Rückintegration der Integratoren 19, 24, 29. Erfolgt während der Rückintegration eine erneute Überlastung, bevor der betreffende Integrator seine untere Begrenzung erreicht hat, so läuft er von einem höheren Niveau aus hoch. Die Ausgangsspannung der Integratoren 19, 24, 29 sind somit ein Maß für den momentanen Überlastungszustand des Kondensators unter voller Berücksichtigung eventueller Vorbelastungen.

Die Ausgangsspannungen der Integratoren 19, 24, 29 werden einem Addierer 30 zugeführt, dessen Ausgangsspannung den momentanen Überlastungszustand des Kondensators abbildet. Die Ausgangsspannung des Addierers 30 wird auf zwei Grenzwertmelder 31 und 32 gegeben. Der Ansprechschwellenwert des Grenzwertmelders 31 ist so eingestellt, daß dieser ein Warnsignal abgibt, wenn die zulässige Dauerbelastbarkeit des Kondensators 1 zwar überschritten ist, jedoch die Überlastung noch nicht unzulässig lange andauert. Der Ansprechschwellenwert des Grenzwertmelders 32 ist auf einen Wert eingestellt, der einer Überlastung des Kondensators für eine unzulässig lange Zeit entspricht. Das Ausgangssignal des Grenzwertmelders 32 wird angezeigt und veranlaßt gleichzeitig die Abschaltung des Kondensators durch Betätigung der Schalteinrichtung 38.

Die erfindungsgemäße Überwachungseinrichtung kann auch zur Überwachung der Spannungsbelastung der Kondensatoren bei Wechsel- oder Drehstromfiltern eingesetzt werden. Bei mehrphasigen Filteranordnungen wird die in der Zeichnung dargestellte Überwachungseinrichtung für jede einzelne Phase eingesetzt. Bei gleicher gerätetechnischer Ausführung erfaßt der induktive Stromwandler 7 jedoch bei einem Wechselstromfilter die gesamte Spannungsbelastung des Kondensators, die sich aus der Grundwelle der Wechselspannung und den überlagerten Oberwellen zusammensetzt. Dementsprechend werden die Potentiometer 15, 20, 25 und 34, sowie die Kennliniengeber 17, 22, 27 auf andere Werte bzw. Kennlinien eingestellt, um die Überlastkennlinie (z. B. « NEMA-Kurve ») des Kondensators nachzubilden.

**Ansprüche**

1. Überwachungsordnung für die Spannungsbelastung eines elektrischen Gerätes, insbesondere eines Kondensators mit einer Langzeitüberwachung der Gerätespannung, bestehend aus einem Vergleicher (16, 21, 26) zur Erfassung der Differenz zwischen einem vorgebbaren Überspannungswert und der Gerätespannung, einem mit dem Ausgangssignal des Vergleichers gespeisten Kennliniengeber (17, 22, 27), dessen Ausgangssignal einem das Überlastungssignal bildenden, aufwärts integrierenden Integrator (19, 24, 29) zugeführt ist und einem von der Differenz zwischen der Gerätespannung und einer einer zulässigen Dauerbelastung entsprechendem Wert beaufschlagten Komparator (36), dadurch gekennzeichnet, daß der Komparator (36) eine konstante, zur Abwärtsintegration des Integrators (19, 24, 29) verwendete Spannung erzeugt, wenn die Gerätespannung kleiner als der der zulässigen Dauerbelastung entsprechende Wert ist.

2. Überwachungsanordnung nach Anspruch 1, dadurch gekennzeichnet, daß parallel zur Langzeitüberwachung eine Kurzzeitüberwachung vorgesehen ist, welche aus einem von der Gerätespannung beaufschlagten Grenzwertmelder (10, 12) besteht, welchem ein Zeitglied (11, 13) mit Ansprechverzögerung nachgeschaltet ist.

**Claims**

1. A monitoring arrangement for the voltage load of an electric device, in particular a capacitor, with a long-term monitoring unit for the device voltage, consisting of comparison means (16, 21, 26) for detecting the difference between a predetermined over-voltage value and the device voltage and a characteristic curve generator (17, 22, 27) fed by the output signal of the comparison means, the generator output signal being supplied to an upwardly integrating integrator (19, 24, 29) which forms the overload signal, and with a comparator (36) fed by the difference between the device voltage and a value corresponding to a permissible continuous load, characterised in that the comparator (36) produces a constant voltage, which is used for the step-down integration of the integrator (19, 24, 29) when the device voltage is smaller than the value corresponding to the permissible continuous load.

2. A monitoring arrangement as claimed in Claim 1, characterised in that there is arranged a short-term monitoring unit which consists of a limit value indicator (10, 12) which is connected to the device voltage parallel to the long-term monitoring unit, and which is followed by a timer element (11, 13) with a delayed response.

**Revendications**

1. Dispositif de surveillance pour la charge en tension d'appareils électriques, plus particulièrement d'un condensateur avec une surveillance longue durée de la tension de l'appareil, constitué par un comparateur (16, 21, 26) pour la saisie de la différence entre la valeur prédéterminée d'une surtension et la tension de l'appareil, par un générateur de courbes caractéristiques (17, 22, 27), alimenté par le signal de sortie du comparateur et dont le signal de sortie est appliqué à un intégrateur (19, 24, 29) intégrant sur intervalle croissant et formant le signal de surcharge, et par un comparateur (36) qui est chargé par la différence entre la tension de l'appareil et une valeur qui correspond à une charge permanente admissible, caractérisé par le fait que le comparateur (36) produit une tension constante utilisée pour l'intégration sur intervalle décroissant de l'intégration (19, 24, 29), lorsque la tension de l'appareil est inférieure à la valeur qui correspond à la charge permanente admissible.

2. Dispositif de surveillance selon la revendication 1, caractérisé par le fait que parallèlement à la surveillance longue durée, il est prévu une surveillance courte durée qui est constituée par un dispositif de signalisation de valeur limite (10, 12), chargé par la tension de l'appareil, et en aval duquel est branché un dispositif de temporisation (11, 13) à déclenchement retardé.